# EUROPÄISCHE PATENTSCHRIFT

(11) **EP 2 095 999 B1**
(45) Veröffentlichungstag und Bekanntmachung des Hinweises auf die Patenterteilung: **21.04.2010**
(21) Anmeldenummer: 08003658.5
(22) Anmeldetag: 28.02.2008
(51) Int. Cl.: B60R 13/02, B62D 29/04, F16B 2/02, F16B 5/12

(54) **Halteleiste zur Befestigung eines Formteils an einem Karosseriekörper eines Kraftfahzeugs**
Retaining strip for attaching a moulded part to the body of a motor car
Baguette de retenue destinée à la fixation d'un élément de formage sur un corps de carrosserie d'un véhicule automobile

(43) Veröffentlichungstag der Anmeldung: 02.09.2009
(73) Patentinhaber: Peguform GmbH, 79268 Bötzingen (DE)
(72) Erfinder: Happle, Wolfgang, 79639 Grenzach-Wyhlen (DE)
(74) Vertreter: Neunert, Peter Andreas

(56) Entgegenhaltungen:
- DE-A1- 19 712 856
- DE-A1- 19 803 402
- US-A- 3 775 927

## Beschreibung

Die vorliegende Erfindung betrifft eine Halteleiste zur Befestigung eines Formteils an einem Karosseriekörper eines Kraftfahrzeugs nach dem Oberbegriff des Patentanspruchs 1.

Gattungsgemäße Befestigungsanordnungen sind in vielfältigen Ausführungsformen für die Befestigung von Formteilen, wie Stoßfänger, Verkleidungen oder Verblendungsleisten, bekannt. Häufig werden dabei Einzelclips eingesetzt, die separat an der Fahrzeugkarosserie appliziert sind und an denen dann die Befestigungsanordnung beziehungsweise die Halteleiste fixiert wird. Ein Nachteil dieser Anordnung ist der relativ hohe Montageaufwand, da die Befestigungsclips einzeln an der Karosserie befestigt werden müssen. Ein weiterer Nachteil besteht darin, dass aufgrund fertigungsbedingter Toleranzschwankungen die Einzelclipse in Bezug auf das zu befestigende Halteteil nicht immer die gewünschte Lagegenauigkeit aufweisen, was die Montage zusätzlich erschwert und worunter auch die Optik des fertig montierten Formteils häufig leidet, da in solchen Fällen der Fugenverlauf zwischen dem Formteil und der Fahrzeugkarosserie ungleichmäßig ist.

Man hat versucht, insbesondere den hohen Montageaufwand dadurch zu umgehen, dass man auf gesonderte Halteteile verzichtet hat und direkt am Formteil Rastelemente vorgesehen hat, mit deren Hilfe das Formteil direkt an der Fahrzeugkarosserie arretiert werden kann. So wird beispielsweise in der DE 295 20 573 U1 eine Zier- oder Stoßleiste für Fahrzeuge beschrieben, die aus einem Thermoplast besteht und an ihrer Rückseite Befestigungselemente aufweist, die als Rastelemente für einen Eingriff in Karosserieöffnungen ausgelegt sind. Auf diese Weise kann zwar die Montage erleichtert werden, jedoch ist das Problem der Lagegenauigkeit nicht gelöst, da derartige Formteile aus optischen Gründen einstückig eingesetzt werden müssen und dabei relativ große Dimensionen annehmen, wodurch die Gefahr der Lageungenauigkeit aufgrund fertigungsbedingter Toleranzschwankungen im Karosseriebau erhöht wird.

Hinzu kommt, dass sich bei groß dimensionierten Formteilen aus Kunststoff mit direkt angeformten Rastelementen, die beispielsweise an Metallteilen der Karosserie befestigt werden sollen, die unterschiedliche thermische Ausdehnung von Metallen und Kunststoffen negativ bemerkbar macht. So kann es bei Kunststoffformteilen, die sehr genau angepasst sind und wenig Toleranz aufweisen, nach einiger Zeit aufgrund der unterschiedlichen thermischen Dehnung zu Rissbildungen kommen, wodurch letztendlich die Stabilität der Befestigung gefährdet ist. Versucht man diesen Nachteil durch eine erhöhte Toleranz auszugleichen, so ist wiederum die Lagegenauigkeit des Formteils nicht gewährleistet.

Die DE 198 03 402 A1 offenbart eine gattungsgemäße Befestigungsanordnung, bei der wieder ein gesondertes Halteteil vorgesehen ist, aber eine erhöhte Montagefreundlichkeit dadurch erhalten wird, dass das separate Halteteil als Halteleiste ausgebildet ist, an der angeformte Koppelelemente vorgesehen sind, die in Ausnehmungen des Karosseriekörpers arretierbar sind. Die in dem Dokument geschilderte Befestigungsanordnung ist zwar montagefreundlich und lagegenau, jedoch kann auch bei dieser Anordnung die unterschiedliche thermische Ausdehnung von Kunststoff und Metall zum Problem werden. Hinzu kommt, dass die Befestigung der Halteleiste an der Karosserie relativ kompliziert ist. So ist vorgesehen, dass die Halteleiste über ein Schlüssellochsystem mit der Karosserie verbunden ist, wobei zum festen Verbindungsschluss mehrere Halteelemente miteinander kombiniert werden müssen.

Der vorliegenden Erfindung liegt somit das Problem zugrunde eine Befestigungsvorrichtung zur Befestigung von Formteilen an Karosseriekörpern anzubieten, die die Nachteile des eingangs zitierten Standes der Technik nicht aufweist.

Gelöst wird dieses Problem mit einer Halteleiste mit den Merkmalen des Anspruchs 1. Zweckmäßige und vorteilhafte Weiterentwicklungen sind Gegenstand der Unteransprüche.

Der Gegenstand der Erfindung ist eine Halteleiste mit einem leistenförmigen Grundkörper, wobei auf der Rückseite des Grundkörpers Zapfen als Rastelemente zur Arretierung der Halteleiste in entsprechenden Rastöffnungen im Karosseriekörper direkt angeformt sind. Auf der Vorderseite des Grundkörpers sind Führungsschienen und Rastzungen zur Aufnahme und Fixierung des entsprechenden Formteils, das an der Karosserie angeordnet werden soll, vorgesehen. Der Kern der Erfindung besteht nun darin, dass die Halteleiste in unmittelbarer Nachbarschaft zu den direkt angeformten Zapfen Verschwächungsbereiche mit senkrecht zur Längsrichtung der Halteleiste angeordneten Rippen aufweist.

Die Rippen sind dabei als senkrecht zu Längsrichtung der Halteleiste und parallel zueinander angeordnete, durch schlitzförmige Ausnehmungen ausgebildete, rippenförmige Stege ausgeführt.

Die als Rastelemente vorgesehenen Zapfen sind nun direkt an den Rippen der Verschwächungsbereiche angeformt. Die Verschwächungsbereiche haben dabei nicht nur die Funktion, die unterschiedliche thermische Dehnung von Metall und Kunststoffen auszugleichen, sondern können ebenfalls Toleranzschwankungen bei der Fertigung der Fahrzeugkarosserie egalisieren.

Die Verschwächungsbereiche mitsamt angeformter Zapfen sind in vorgegeben Abständen voneinander auf der Halteleiste angeordnet, wobei die senkrecht zur Längsrichtung angeordneten Rippen die ursprüngliche Stärke der Halteleiste aufweisen, während die Bereiche zwischen den Rippen geschwächt sind oder vorzugsweise als schlitzförmige Ausnehmungen ausgebildet sind.

Da die Befestigungszapfen erfindungsgemäß den Rippen direkt angeformt sind, wird die unterschiedliche thermische Ausdehnung auf die Rippen übertragen, die nun in die geschwächten Bereiche ausweichen und damit die Unterschiede wiederauffangen können, ohne dass die Spannungen in der Halteleiste so groß werden, dass es zu einer Rissbildung im Kunststoff kommt. Die Rippen sind dabei so stark ausgebildet, dass die Festigkeit der Halteleiste insgesamt durch die Verschwächungsbereiche nicht wesentlich reduziert wird. Da durch die Verschwächungsbereiche Spannungen in Längsrichtung ausgeglichen werden können, ist es nun auch möglich, konstruktiv relativ einfache Rastelemente zur Befestigung der Halteleiste am Karosseriekörper einzusetzen, da die Rastelemente nun selber keine Dehnungsunterschiede mehr ausgleichen oder auffangen müssen, sondern diese direkt auf den Verschwächungsbereich übertragen.

Auf diese Weise gelingt es, selbst lange Formteile problemlos an der Karosserie zu befestigen, ohne dass die Gefahr besteht, dass aufgrund der unterschiedlichen thermischen Ausdehnung die Befestigung des Formteils an der Karosserie zerstört wird. Je nach Länge des zu befestigenden Formteils kann es allerdings vorteilhaft sein, wenn zur Befestigung nicht nur eine Leiste eingesetzt wird, deren Länge dem des Formteils entspricht, sondern die Befestigungsanordnung auf mehrere kleinere Leisten verteilt wird, die hintereinander angeordnet sind. Dadurch erreicht man, dass sich der gesamte Dehnungsunterschied auf die einzelnen Halteleisten verteilt, wodurch die Spannungen, denen die Halteleiste ausgesetzt ist, reduziert werden.

Eine vorteilhafte Ausführungsform der Befestigungszapfen sieht vor, dass diese als seitlich offene, gleichschenklige Kegel ausgeführt wurde, wobei die Schenkel des Zapfens brückenförmig zwischen zwei benachbarten Stegen angeordnet sind und diesen dabei direkt angeformt sind. Diese Ausgestaltung der Zapfen ermöglicht eine leichte Montage und Demontage der Halteleiste, da die so gestalteten Zapfen leicht zusammengepresst werden können, um in die Rastöffnung eingeclipst oder auch aus dieser wieder entfernt zu werden.

Eine einfache und damit auch bevorzugte Ausgestaltung der vorliegenden Erfindung sieht vor, dass ein Verschwächungsbereich zwei durch schlitzförmige Ausnehmungen ausgebildet Stege umfasst, auf deren Rückseite der als Rastelement vorgesehene Zapfen direkt angeformt ist. Dieser Zapfen ist dann - wie bereits oben beschrieben - als Brücke zwischen den beiden Stegen ausgebildet.

Derartige Halteleisten werden üblicherweise als Spritzformteil aus einem thermoplastischen Kunststoff aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat-Copolymerisat (ABS-PC) oder Polyoxymethylen (POM) gebildet. Je nach dem, welchen Belastungen die Halteleiste ausgesetzt ist, können zusätzlich Fasern zur Verstärkung eingebaut werden, wozu Textilfasern, Glasfasern oder Karbonfasern in Frage kommen.

Die erfindungsgemäßen Halteleisten sind insbesondere zur Befestigung von länglich ausgebildeten Formteilen an der Karosserie eines Fahrzeuges gedacht, wie zum Beispiel Stoßfänger, Verkleidungen, Verblendungsleisten oder Abdeckungen der Türschweller.

Im Folgenden wird die Erfindung anhand von Zeichnungen ausführlich erläutert. Dabei zeigen
- Fig. 1: eine perspektivische Seitenansicht der Halteleiste,
- Fig. 2: eine perspektivische Ansicht der Rückseite eines Ausschnitts der Halteleiste mit eingeclipstem Formteil,
- Fig. 3: eine perspektivische Ansicht der Vorderseite der Halteleiste und
- Fig. 4: einen Ausschnitt der Halteleiste mit einem Verschwächungsbereich.

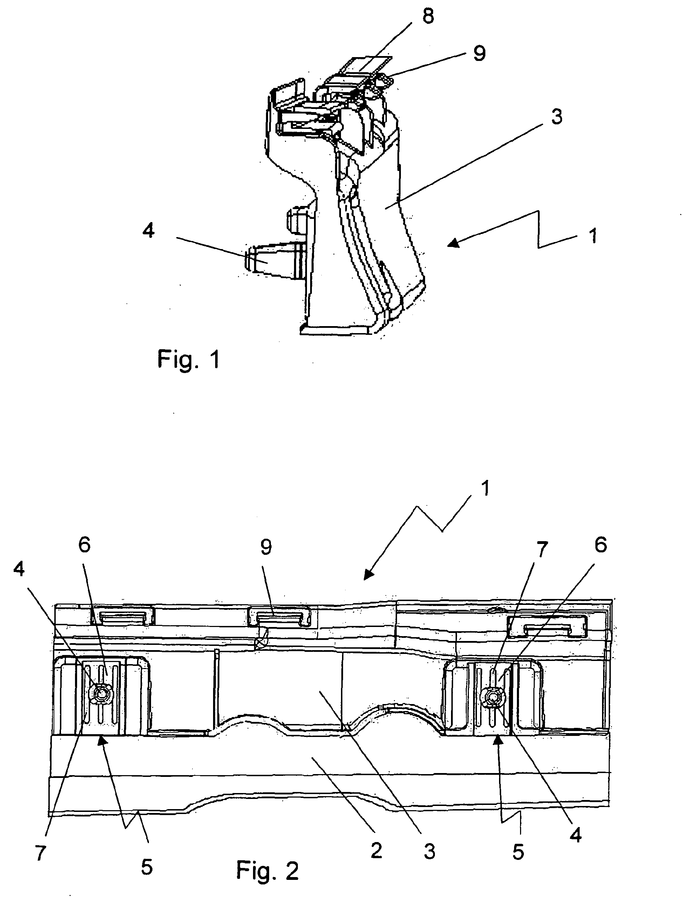

Die Figur 1 zeigt in einer perspektivischen Seitenansicht einen Überblick über die Halteleiste 1 mit einem gestreckten leistenformigen Grundkörper 3, der in seinem oberen Bereich auf der zum Formteil gewandten Vorderseite Führungsschienen 8 und Rastzungen 9 aufweist, die zur Aufnahme und Fixierung des Formteils 2 vorgesehen sind. Auf der zur Karosserie gewandten Seite des Grundkörpers 3 sind direkt angeformte Zapfen 4 als Rastelemente zur Arretierung der Halteleiste 1 in entsprechenden Rastöffnungen im Karosseriekörper zu erkennen.

Die Figur 2 zeigt eine rückwärtige Ansicht der Halteleiste 1 mit einem eingeclipsten Formteil 2. In dieser Draufsicht sind insbesondere die Verschwächungsbereiche 5 zu erkennen mit senkrecht zur Längsrichtung angeordneten Rippen 6, die durch ebenfalls senkrechte zur Längsrichtung angeordnete schlitzförmige Ausnehmungen 7 ausgebildet werden. Bei der in der Figur 2 dargestellten Ausgestaltung der vorliegenden Erfindung sind je drei schlitzförmige Ausnehmungen 7 vorgesehen, die zwei rippenförmige Stege 6 ausbilden, an denen der Zapfen 4 zur Befestigung der Leiste an der Karosserie direkt angeformt ist. Des Weiteren sind in dieser Abbildung ebenfalls die Rückseiten der Rastzungen 9 zu erkennen, mit denen das Formteil 2 auf der Halteleiste 1 fixiert wird.

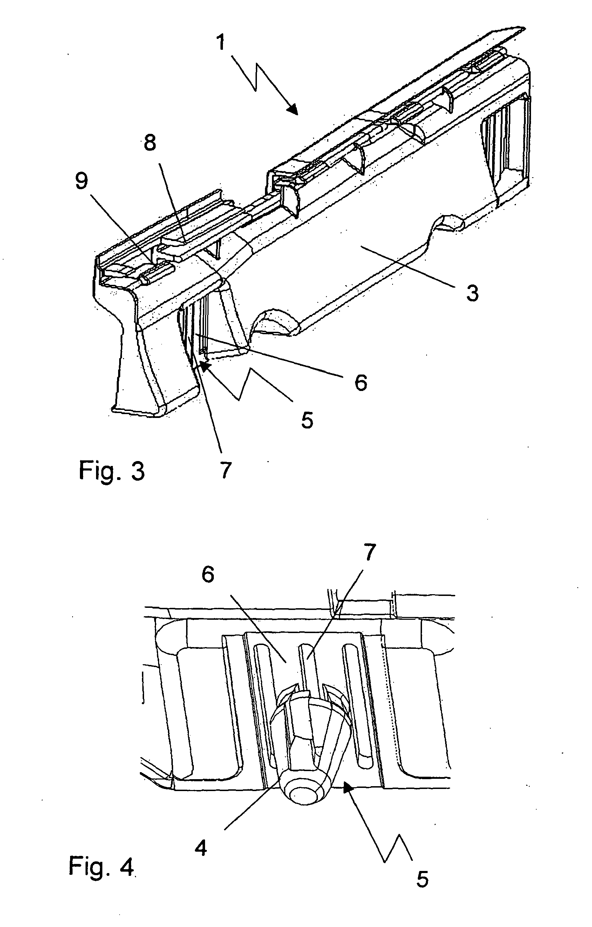

Die Figur 3 zeigt in einer perspektivischen Darstellung mit teilschnitten eine Vorderansicht der erfindungsgemäßen Halteleiste 1. In dieser Ansicht sind im oberen Bereich des Grundkörpers 3 der Halteleiste 1 als Befestigungselemente zur Aufnahme und Fixierung des Formteils 2 Befestigungsleisten 8 und mehrere Rastzungen 9 zu erkennen. Die Verschwächungsbereiche 5 mit ihren senkrecht zur Längsrichtung ausgebildeten rippenförmigen Stegen 6 und den entsprechenden schlitzförmigen Ausnehmungen 7 sind als Vertiefungen im unteren Bereich des leistenförmigen Grundkörpers 3 angeordnet.

Die Figur 4 zeigt als Ausschnitt in einer perspektivischen Darstellung einen Verschwächungsbereich 5 mit einem als Rastelement vorgesehenen Zapfen 4, der als seitlich offener gleichschenkliger Kegel ausgeführt ist und den rippenförmigen Stegen 6 direkt angeformt ist, wobei der Zapfen 4 eine Brücke zwischen den beiden Stegen 6 ausbildet.

### Bezugszeichenliste

- 1: Halteleiste
- 2: Formteil
- 3: Grundkörper (Halteleiste)
- 4: Zapfen (Rastelement)
- 5: Verschwächungsbereich
- 6: Rippe (Steg)
- 7: Schlitzförmige Ausnehmung
- 8: Führungsschiene
- 9: Rastzunge

## Patentansprüche

1. Halteleiste (1) zur Befestigung eines Formteils (2) an einem Karosseriekörper eines Kraftfahrzeugs, wobei die Halteleiste (1) einen leistenförmigen Grundkörper (3) umfasst mit
- auf der Rückseite des Grundkörpers (3) direkt angeformten Zapfen (4) als Rastelemente zur Arretierung der Halteleiste (1) in entsprechenden Rastöffnungen im Karosseriekörper und
- auf der Vorderseite des Grundkörpers (3) direkt angeformten Befestigungselementen zur Aufnahme und Fixierung des Formteils (2),
**dadurch gekennzeichnet, dass**
die Halteleiste (1) in unmittelbarer Nachbarschaft zu den direkt angeformten Zapfen (4) Verschwächungsbereiche (5) mit senkrecht zu Längsrichtung der Halteleiste (1) angeordneten Rippen (6) aufweist, wobei die Rippen (6) als senkrecht zur Längsrichtung der Halteleiste (1) und parallel zueinander angeordnete, durch schlitzförmige Ausnehmungen (7) ausgebildete, rippenförmige Stege ausgeführt sind.

2. Halteleiste nach Anspruch 1,
**dadurch gekennzeichnet, dass**
die als Rastelemente vorgesehenen Zapfen (4) direkt an den Rippen (6) der Verschwächungsbereiche (5) angeformt sind.

3. Halteleiste nach Anspruch 1 oder 2,
**dadurch gekennzeichnet, dass**
die als Rastelemente vorgesehenen Zapfen (4) als seitlich offene, gleichschenklige Kegel ausgeführt sind, die brückenförmig zwischen zwei benachbarten Stegen (6) angeordnet und diesen direkt angeformt sind.

4. Halteleiste nach einem der Ansprüche 1 bis 3,
**dadurch gekennzeichnet, dass**
der Verschwächungsbereich zwei durch schlitzförmige Ausnehmungen (7) als Stege ausgebildete Rippen (6) umfasst, auf deren Rückseite der als Rastelement vorgesehene Zapfen (4) direkt angeformt ist, wobei der Zapfen (4) brückenförmig zwischen den beiden Stegen angeordnet ist.

5. Halteleiste nach einem der Ansprüche 1 bis 4,
**dadurch gekennzeichnet, dass**
die auf der Vorderseite der Halteleiste (1) angeformten Befestigungselemente Führungsschienen (8) und Rastzungen (9) umfassen.

6. Halteleiste nach einem der Ansprüche 1 bis 5,
**dadurch gekennzeichnet, dass**
die Halteleiste aus einem thermoplastischen Kunststoff aus der Gruppe Polypropylen, Polyethylen, Polybutylenterephthalat, Polyamid, Polystyrol, Polycarbonat, Polymethylmethacrylat, Acrylnitril-Butadien-Styrol, Acrylnitril-Butadien-Styrol / Polycarbonat - Copolymerisat oder Polyoxymethylen besteht.

## Claims

1. Retaining strip (1) for attaching a shaped part (2) to a bodywork element of a motor vehicle, wherein the retaining strip (1) comprises a strip-shaped main body (3) with
- pins (4) integrally moulded directly on the rear side of the main body (3) as latching elements for immobilising the retaining strip (1) in corresponding latching openings in the bodywork element and
- attachment elements integrally moulded directly on the front side of the main body (3) for holding and fixing the shaped part (2),
**characterised in that** the retaining strip (1) has, immediately adjacent to the directly integrally moulded pins (4), areas of weakening (5) with ribs (6) arranged perpendicular to the longitudinal direction of the retaining strip (1), wherein the ribs (6) are designed as rib-shaped webs which are formed by slot-shaped openings (7) and are arranged parallel to one another and perpendicular to the longitudinal direction of the retaining strip (1).

2. Retaining strip according to claim 1, **characterised in that** the pins (4) provided as latching elements are integrally moulded directly on the ribs (6) of the areas of weakening (5).

3. Retaining strip according to claim 1 or 2, **characterised in that** the pins (4) provided as latching elements are designed as isosceles cones which are open at the side and which are arranged in the manner of a bridge between two adjacent webs (6) and are integrally moulded directly on the latter.

4. Retaining strip according to one of claims 1 to 3, **characterised in that** the area of weakening comprises two ribs (6) which are formed as webs by two slot-shaped openings (7) and on the rear side of which the pin (4) provided as the latching element is directly integrally moulded, wherein the pin (4) is arranged in the manner of a bridge between the two webs.

5. Retaining strip according to one of claims 1 to 4, **characterised in that** the attachment elements integrally moulded on the front side of the retaining strip (1) comprise guide rails (8) and latching tongues (9).

6. Retaining strip according to one of claims 1 to 5, **characterised in that** the retaining strip is made from a thermoplastic plastic selected from the group consisting of polypropylene, polyethylene, polybutylene terephthalate, polyamide, polystyrene, polycarbonate, polymethyl methacrylate, acrylonitrile butadiene styrene, acrylonitrile butadiene styrene/polycarbonate copolymer or polyoxymethylene.

## Revendications

1. Baguette de retenue (1) pour la fixation d'une pièce de forme (2) sur un corps de carrosserie d'un véhicule automobile, la baguette de retenue (1) ayant un corps de base (3) en forme de baguette avec,
- des goujons (4) moulés directement au dos du corps de base (3) servant d'élément d'accrochage pour bloquer la baguette de retenue (1) dans des orifices d'accrochage correspondants du corps de carrosserie, et
- des éléments de fixation formés directement sur la face avant du corps de base (3) pour recevoir et fixer la pièce de forme (2),
**caractérisée en ce que**
au voisinage direct des goujons (4) formés directement, la baguette de retenue (1) comporte des zones affaiblies (5) avec des nervures (6) perpendiculaires à la direction longitudinale de la baguette de retenue (1), les nervures (6) étant réalisées par des branches en forme de nervures perpendiculaires à la direction longitudinale de la baguette de retenue (1) et parallèles les unes aux autres, ces branches en forme de nervures étant formées par des évidements en forme de fentes (7).

2. Baguette de retenue selon la revendication 1,
**caractérisée en ce que**
les goujons (4) prévus comme éléments d'accrochage sont formés directement sur les nervures (6) des zones affaiblies (5).

3. Baguette de retenue selon la revendication 1 ou 2,
**caractérisée en ce que**
les goujons (4) prévus comme éléments d'accrochage, sont réalisés sous la forme de cônes ouverts latéralement et ayant des branches identiques, ces cônes enjambant deux entretoises (6) voisines, sont formés directement sur celles-ci.

4. Baguette de retenue selon l'une des revendications 1 à 3,
**caractérisée en ce que**
la zone affaiblie comporte deux nervures (6) réalisées sous la forme d'entretoises réalisés par des évidements (7) en forme de fentes et le goujon (4) prévu comme élément d'accrochage, est formé directement au dos des nervures (6),
le goujon (4) enjambant les deux entretoises.

5. Baguette de retenue selon l'une des revendications 1 à 4,
**caractérisée en ce que**
les éléments de fixation formés sur la face avant de la baguette de retenue (1) sont des rails de guidage (8) et des languettes d'accrochage (9).

6. Baguette de retenue selon l'une des revendications 1 à 5,
**caractérisée en ce que**
la baguette de retenue est en une matière thermoplastique du groupe des polypropylène, polyéthylène, polybutylène-téréphthalate, polyamides, polystyrènes, polycarbonates, polyméthylméthacrylates, acrylonitile-butadiène-styrène, copolyméres acrylonitrile-butadiène-styrène / polycarbonate ou polyoxyméthylène.
